# EUROPÄISCHE PATENTANMELDUNG

(11) **EP 2 301 789 A2**
(43) Veröffentlichungstag der Anmeldung: **30.03.2011**
(21) Anmeldenummer: 10172990.3
(22) Anmeldetag: 17.08.2010
(51) Int. Cl.: B60L 9/16

(54) **Schienenfahrzeug mit Einzelradantrieben**

(30) Priorität: 24.09.2009 DE 102009042870
(71) Anmelder: Siemens Aktiengesellschaft, 80333 München (DE)
(72) Erfinder: Jöckel, Andreas, 90408 Nürnberg (DE)

(57) **Zusammenfassung**

Ein Schienenfahrzeug (1), weist ein Antriebsgestell (3) auf, wobei das Antriebsgestell (3) angetriebene Räder (5,6,7,8) aufweist, wobei jedes angetriebenen Rad (5,6,7,8) des Antriebsgestells (3) mittels einer elektrischen Maschine (9,10, 11,12) antreibbar ist, wobei der elektrischen Maschine (9,10, 11,12) ein Stromrichter (13,14,15,16) zugeordnet ist, wobei derart jedem angetriebenen Rad (5,6,7,8) jeweils ein eigener Stromrichter (13,14,15,16) zugeordnet ist.

## Beschreibung

Schienenfahrzeuge weisen Fahrwerke auf, wie z.B. Triebdrehgestelle mit Radsätzen. Abhängig von der Qualität eines Schienenweges und des Verlaufs des Schienenweges mit integrierten Kurven unterliegen die Räder des Schienenfahrzeuges einem Verschleiß.

Eine Aufgabe der Erfindung ist es den Verschleiß von Rädern eines Schienenfahrzeuges zur reduzieren und/oder die Laufruhe des Schienenfahrzeuges zu verbessern.

Die Lösung der Aufgabe gelingt z.B. mit einem Gegenstand nach einem der Ansprüche 1 bis 15.

Ein Schienenfahrzeug ist beispielsweise eine Straßenbahn, eine Stadtbahn, eine S-Bahn, ein Triebzug, eine Lokomotive, usw. Straßen- und Stadtbahnen sind als Niederflurbahn auslegbar. Die Straßenbahn bzw. die Stadtbahn kann als eine 100%-Niederflurbahn ausgeführt sein. Die Straßenbahn bzw. die Stadtbahn kann, insbesondere zusätzlich, mit einzeln angetriebenen Rädern ausgeführt sein. Dabei wird auf ein klassisches Triebdrehgestelle mit Radsätzen verzichtet, wobei die Einzelräder jedes für sich mittels einer elektrischen Maschine antreibbar sind.

Ein Schienenfahrzeug, weist ein Antriebsgestell auf. Ein Antriebsgestell ist beispielsweise ein Drehgestell oder auch eine Einrichtung, an welcher angetriebene Räder des Schienenfahrzeuges mechanisch befestigt bzw. aufgehängt sind. Das Antriebsgestell weist angetriebene Räder auf, wobei jedes angetriebene Rad einzeln angetrieben ist. Eine elektrische Maschine treibt in diesem Fall folglich keine zwei Räder an. Ist jedes angetriebene Rad einzeln angetrieben, dann ist jedes einzeln angetriebene Rad des Antriebsgestells mittels einer elektrischen Maschine antreibbar, wobei der jeweiligen elektrischen Maschine ein Stromrichter zugeordnet ist. Der Stromrichter ist beispielsweise ein Wechselrichter oder auch ein Umrichter. Mit der obig beschriebenen Zuordnung ist folglich auch jedem einzeln angetriebenen Rad des Antriebsgestells jeweils ein eigener Stromrichter zugeordnet.

Mittels einzeln angetriebener Räder wird die Flexibilität erhöht, wie diese Räder über die elektrischen Maschinen in ihrer Bewegung geregelt werden können.

Wenn die Einzelräder nicht starr gekoppelt sind, kann sich daraus ein Vorteil insbesondere in engen Bögen/Kurven ergeben. In der Geraden ist bei Einzelrad-Fahrwerken auf deren Lauf zu achten und auch auf den Verschleiß. Bei Radsätzen sind die gegenüber liegenden Räder starr gekoppelt, was einen Vorteil auf einer geraden Strecke bzgl. eines zu erwartenden Verschleißes habe kann. Bei einem Einzelrad-Fahrwerk werden in Ermangelung einer Radsatzwelle gegenüber liegende einzeln angetriebene Räder vorteilhaft elektronisch gekoppelt. Die Radsatzwelle kann also elektronisch emuliert werden. Dies kann beispielsweise durch einen Winkelgleichlauf zweier gegenüber liegender angetriebener Räder erreicht werden. Um dies zu erreichen regeln die jeweiligen Regelungssysteme der elektrischen Motoren der angetriebenen Räder beispielsweise auf eine gemeinsame fortlaufende Lageposition. Ein Rad kann beispielweise auch als ein Master definiert werden, wobei das andere Rad ein Slave ist, welches einer Winkelposition bzw. einer Lageposition des Masters folgt.

Bei einzeln angetriebenen Rädern können unabhängig steuerbare Permanenterregte-Synchron-Fahrmotoren eingesetzt werden. Diese sind insbesondere einem Antriebsgestell zuzuordnen. Beispielsweise sind 4 Räder und damit 4 unabhängig steuerbare Permanenterregte-Synchron-Fahrmotoren einander zugeordnet. Die einander zugeordneten Räder sind dem Antriebsgestell zugeordnet, wobei dieses Gestell zumindest eine zuordnende Anbringungsmöglichkeit der zugeordneten Räder darstellt. Zusätzlich zur Traktion (Anfahren und Bremsen) kann damit eine Verschleiß- und geräuschverbesserte Steuerung/Regelung eines Triebfahrwerks im Gleis realisiert werden.

Eine Steuerung bzw. Führung eines Treibfahrwerks im Gleis kann passiv über die Rad-Schiene-Kräfte, d.h. verschleißbehaftet erfolgen. Bei einem Antriebskonzept mit einem Kegelradgetriebe gekoppelten Längsantrieb ist eine individuelle Unterstützung der Spurführung über Antriebsmomente nicht möglich. Werden allerdings die Räder einzeln angetrieben, so ist eine individuelle Unterstützung der Spurführung möglich.

In einer Ausgestaltung des Schienenfahrzeugs ist jedem angetriebenen Rad ein eigenes Regelungssystem zugeordnet. Das Regelungssystem weist beispielsweise zumindest einen der folgenden Reglertypen auf:
- einen Stromregler,
- einen Geschwindigkeitsregler,
- einen Positionsregler/Lageregler,
- usw.

Das dem jeweiligen Rad zugeordnete Regelungssystem ist der jeweiligen elektrischen Maschine zugeordnet. Das Regelungssystem regelt also die elektrische Maschine und da die elektrische Maschine mit jeweils nur einem Rad mechanisch gekoppelt ist (insbesondere steif gekoppelt über eine Welle) dient das Regelungssystem auch der Regelung des entsprechenden Rades.

In einer Ausgestaltung des Schienenfahrzeuges weisen die Regelungssysteme eines Antriebsgestells einen gemeinsamen Synchronisationstakt auf. Damit ist die Synchronisation der einzeln angetriebenen Räder erleichtert.

In einer Ausgestaltung des Schienenfahrzeuges weisen die Regelungssysteme eines Antriebsgestells eine datentechnische Verbindung zu einem Systembus auf. Der Systembus dient vorteilhaft auch der Synchronisation der einzeln angetriebenen Räder. Sind die Regelungssysteme eines Antriebsgestells auf den Systembus synchronisiert, kann auch eine Synchronisation mit einem übergeordneten Regelungs-/Steuerungssystem des Schienenfahrzeuges erfolgen. Der Systembus weist beispielsweise auch eine datentechnische Verbindung mit einer Mensch-Maschine-Schnittstelle auf oder auch mit einem Kommunikationssystem zur Übermittlung von Daten zu einer Schienenfahrzeug-Leitzentrale.

In einer Ausgestaltung des Schienenfahrzeuges weist das Antriebsgestell zwei Räder auf, welche einander gegenüber positioniert sind und unterschiedlichen Schienen zuzuordnen sind (ein Gleis weist zumindest zwei Schienen auf), wobei den gegenüber liegenden Rädern und/oder den zugeordneten elektrischen Maschinen jeweils ein Lagegeber oder ein Geber dessen Ausgangssignal als ein Lageistwert verwendet werden kann, zugeordnet ist. In einer Ausgestaltung wird bei nur einem Rad der gegenüber liegenden Räder ein Lagesignal verwendet, so dass folglich auch nur bei diesem Rad eine entsprechende Messeinrichtung vorzusehen ist.

In einer Ausgestaltung des Schienenfahrzeugs weist das Antriebsgestell zwei Räder auf, welche einander gegenüber positioniert sind und unterschiedlichen Schienen zuzuordnen sind, wobei die Bewegung zumindest eines der zwei Räder mittels einer Lageregelung geregelt bewegbar ist. Damit kann beispielsweise eine Starrachse wie bei einem Radsatz simuliert werden. Vorteilhaft kann bei einem gesamten Zug eine simulierte Radsatzwelle als eine Leit-Radsatzwelle erzeugt werden, wobei einzeln angetriebene Räder eines Zuges (darunter ist beispielsweise auch eine Straßenbahn zu verstehen) auf die simulierte Leit-Radsatzwelle synchronisiert werden.

In einer Ausgestaltung des Schienenfahrzeuges ist eine Spurführungseinrichtung mit den Regelungssystemen für die einzeln angetriebenen Räder datentechnisch verbunden. Mittels der Spurführungseinrichtung können die Regelungssysteme koordiniert werden, wobei beispielsweise zumindest eine der folgenden Koordinationsfunktionen erzielbar bzw. durchführbar ist:
- eine elektronische Winkelkopplung zumindest zwischen zwei Rädern;
- eine Momentenregelung von zumindest einem Rad;
- eine streckendatenabhängige Regelung zumindest eines Rades (dies kann z.B. Kurvenradien, Streckenlängen oder auch Gleisschäden berücksichtigen);
- eine von der Position des Schienenfahrzeuges abhängige Regelung zumindest eines Rades, wobei hierfür beispielsweise ein globales Positioniersystem verwendet wird; Das Schienenfahrzeug kann hierfür beispielsweise einen GPS-Empfänger aufweisen, wobei dessen empfangene Daten vorteilhaft mit Streckendaten verknüpft werden bzw. sind.

In einer Ausgestaltung des Schienenfahrzeuges kann mittels eines Mensch-Maschine-Interfaces, welches sich beispielsweise im Schienenfahrzeug befindet oder auch von diesem entfernt (als ein Interface zur Fernbedienung), ein Regelungssystem des jeweiligen Einzelrades beeinflusst werden oder es können auch parallel mehrere Regelungssysteme verschiedener Einzelräder gleichzeitig über den Bus beeinflusst werden.

In einer Ausgestaltung des Schienenfahrzeuges sind die angetriebenen Räder eines Antriebsgestells mit dem jeweiligen Stromrichter einem gemeinsamen elektrischen Zwischenkreis zugeordnet, wobei der Zwischenkreis einen Zwischenkreiskondensator aufweist. Der Zwischenkreiskondensator wird vorteilhaft als ein Energiepuffer verwendet, um beispielsweise Bremsenergie des einen angetriebenen Rades (Motorbremse) zwischen zu speichern und die zwischen gespeicherte Energie beispielsweise für eine Beschleunigung eines anderen Rades, welches demselben Zwischenkreis zugeordnet ist, zu verwenden.

In einer Ausgestaltung des Schienenfahrzeuges sind mittels der Spurführungseinrichtung Streckendaten verarbeitbar und/oder globale Positionsdaten, wobei die Streckendaten vorteilhaft über eine Funkverbindung zu einem Datenspeicher für Streckendaten aktualisierbar sind.

In einer Ausgestaltung des Schienenfahrzeuges weist das Schienenfahrzeug einen Gleisbogen-Fahrmodus und einen Strecken-Fahrmodus auf. Abhängig davon, ob sich das Schienenfahrzeug in einem Gleisbogen oder auf einer geraden Strecke befindet, wird der Gleisbogen-Fahrmodus oder der Strecken-Fahrmodus aktiviert. Für diese Aktivierung bzw. für diesen Wechsel kann eine Fahrmoduswechseleinrichtung zum Wechsel zwischen dem Gleisbogen-Fahrmodus und dem Strecken-Fahrmodus vorgesehen sein. Die Modi unterscheiden sich beispielsweise darin dass abhängig vom Modus bestimmte ausgewählte angetriebene Räder eines Antriebsgestells mit einer anderen unterschiedlichen Regelung betrieben werden (z.B. Momentenregelung, Positionsregelung, Geschwindigkeitsregelung, usw.) als weitere dieses Antriebsgestells.

In einer Ausgestaltung des Schienenfahrzeuges erfolgt ein Wechsel zwischen den Fahrmodi abhängig von Streckendaten und/oder einer globalen Fahrzeugposition.

In einer Ausgestaltung des Schienenfahrzeuges ist ein Wechsel zwischen den Fahrmodi abhängig von Streckendaten und/oder globalen Positionsdaten, wobei im Schienenfahrzeug die Position der angetriebenen Räder zueinander gespeichert ist.

In einer Ausgestaltung des Schienenfahrzeuges wird während des Wechsels der Modi eine Momentenregelung eines Rades aktiviert ist. Die Momentenregelung kann auch während des Gleisbogen-Fahrmodus aktiv bleiben.

Ein Antriebssystem eines Schienefahrzeuges kann derart ausgestaltet sein, dass:
- jedes einzelne Rad über einen separaten Elektromotor (mit oder ohne Getriebe) angetrieben ist, d.h. zum Antrieb mechanisch nicht gekoppelt; der Radmotor des einzeln angetriebenen Rades ist vorteilhafterweise ein PM-Fahrmotor; und/oder
- bei einem Satz von vier angetriebenen Rädern eine Speisung jedes einzelnen Radmotors über je einen individuellen Pulswechselrichter, der unabhängig von den drei anderen das Drehmoment des Radmotors frei einstellen kann, erfolgt; und/oder
- eine Identifikation nicht nur einer Drehzahl, sondern auch des mechanischen Lagewinkels jedes einzelnen angetriebenen Rades durch eine maschinennahe (Antriebs-) Steuerung oder entsprechende Winkelsensoren erfolgt; und/oder
- eine Realisierung der Traktionsfunktionen Antreiben und Bremsen durch eine koordinierte Ansteuerung der antreibbaren Räder erfolgen kann; und/oder
- ein Spurführungs-Assistenzsystem mittels einer überlagerten Steuerung realisiert ist, wobei dies additiv zu den Traktionsanforderungen positive oder negative Drehmoment-Sollwerte an die vier Radmotoren gibt, um die Spurführung des Triebfahrwerks verschleißarm zu unterstützen; und/oder
- das Spurführungs-Assistenzsystem die Position des Triebfahrwerks auf der Strecke (Gerade, Gleisbogen, etc.) aus Sensoren (z.B. GPS, Streckenpositionsgeber, Lagesensoren, etc.) und aus einer in einem Rechner gespeicherten Streckendatei kennt.

Nachfolgend werden beispielhaft nicht einschränkende Ausführungsformen der Erfindung unter Bezug auf die Zeichnungen beschrieben, dabei zeigt:
- FIG 1: ein Schienenfahrzeug;
- FIG 2: eine Prinzipdarstellung eines 100% Niederflur-Fahr- werkes ohne Radsatz;
- FIG 3: eine Prinzipdarstellung eines gekoppelten Längsan- triebs für eine Niederflur-Straßenbahn;
- FIG 4: eine Prinzipdarstellung eines Einzelrad-Triebfahr- werks für eine Niederflur-Straßenbahn;
- FIG 5: eine Prinzipdarstellung einer Regelungs-Architek- tur; und
- FIG 6: eine Fahrmoduswechseleinrichtung.

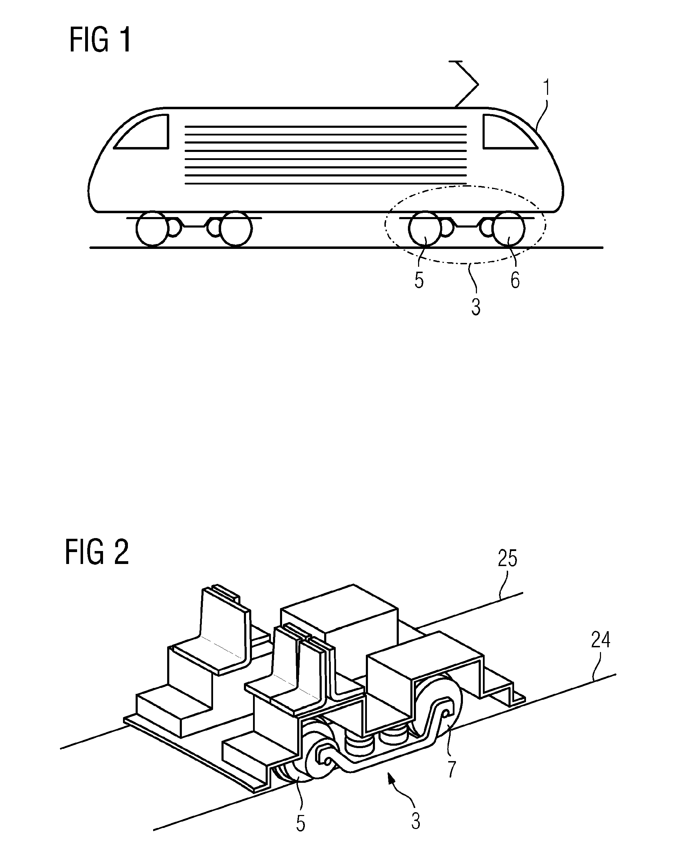

Die Darstellung gemäß FIG 1 zeigt ein Schienenfahrzeug 1, welches ein Antriebsgestell 3, welches hier ein Drehgestell ist, aufweist. Das Antriebsgestell 3 weist Räder 5 und 6 auf.

Die Darstellung gemäß FIG 2 zeigt eine Prinzipdarstellung eines 100% Niederflur-Fahrwerkes ohne Radsatz. Es ist ein Antriebsgestell 3 mit Rädern 5 und 7 dargestellt, wobei Schienen 24 und 25 ein Gleis bilden.

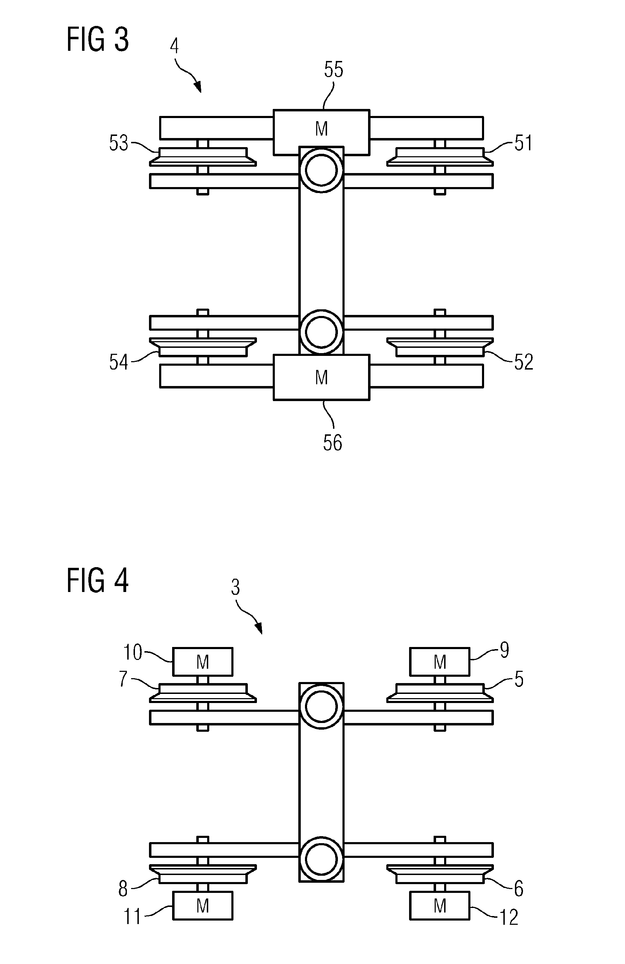

Die Darstellung gemäß FIG 3 zeigt eine Prinzipdarstellung eines gekoppelten Längsantriebs für eine Niederflur-Straßenbahn. Dieser weist zwei elektrische Maschinen 55 und 56 zum Antrieb der Räder 51, 52, 53 und 54 auf, wobei die elektrische Maschine 55 zum Antrieb der Räder 53 und 51 vorgesehen ist und die elektrische Maschine 56 zum Antrieb der Räder 54 und 52 vorgesehen ist. Dabei können z.B. Asynchron-Radantriebe eingesetzt werden, die elektrisch an nur einem Pulswechselrichter parallel geschaltet sind. Damit fehlt allerdings hier der Freiheitsgrad einer individuellen Steuerung, um die Spurführung unterstützen zu können.

Die Darstellung gemäß FIG 4 zeigt eine Prinzipdarstellung eines Einzelrad-Triebfahrwerks 3 (Antriebsgestell) für eine Niederflur Straßenbahn. Dieses weist vier elektrische Maschinen 9, 10, 11 und 12 zum jeweiligen Antrieb der Räder 5, 6, 7 und 8 auf, wobei:
- die elektrische Maschine 9 zum Antrieb des Rades 5 vorgesehen ist,
- die elektrische Maschine 10 zum Antrieb des Rades 7 vorgesehen ist,
- die elektrische Maschine 11 zum Antrieb des Rades 8 vorgesehen ist, und
- die elektrische Maschine 12 zum Antrieb des Rades 6 vorgesehen ist.

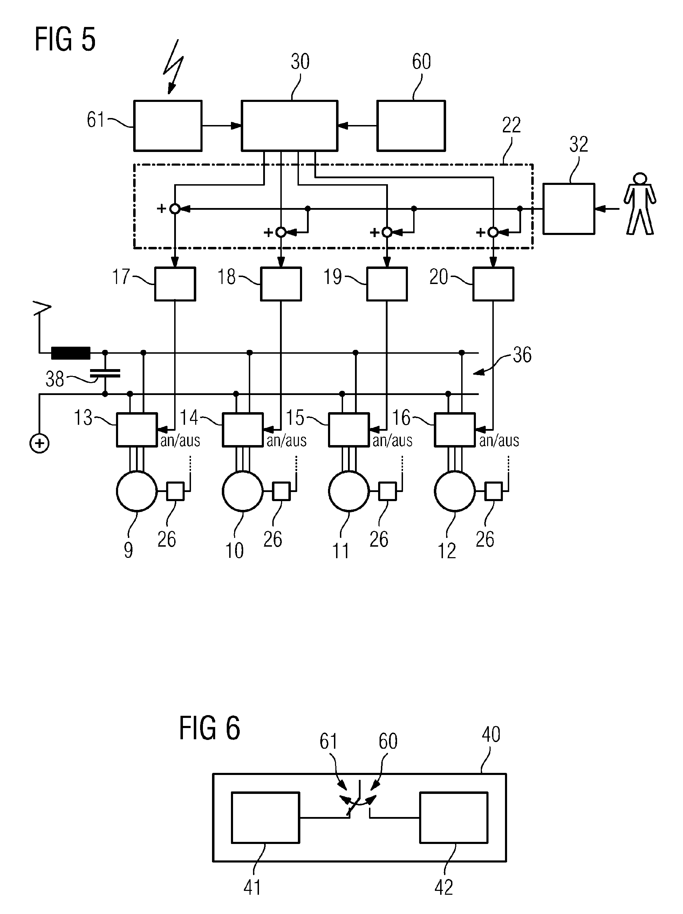

Die Darstellung gemäß FIG 5 zeigt eine Prinzipdarstellung einer Regelungs-Architektur mit vier elektrischen Maschinen 9, 10, 11 und 12. Den vier elektrischen Maschinen 9, 10, 11 und 12 ist jeweils ein Geber 26 zugeordnet. Ferner ist den vier elektrischen Maschinen 9, 10, 11 und 12 jeweils ein eigener separater Umrichter 13, 14, 15 und 16 zugeordnet. Die Umrichter 13, 14, 15 und 16 weisen einen gemeinsamen Zwischenkreis 36 auf, wobei der gemeinsame Zwischenkreis eine Zwischenkreiskondensator 38 aufweist. Die Umrichter 13, 14, 15 und 16 sind datentechnisch mit jeweils einem zugeordneten Regelungssystem 17, 18, 19 und 20 verbunden. Auch die Geber 26 können hierzu eine Verbindung aufweisen. Die Regelungssysteme 17, 18, 19 und 20 sind über einen Datenbus 22 mit einer Spurführungsreglung 30 verbunden. Der Spurführungsregelung 30 können Streckendaten 60 und Fahrzeugspositionsdaten 61 beispielsweise aus einem GPS-Empfänger zugeführt werden. An den Datenbus 22 ist auch ein Mensch-Maschine-Interface 32 angeschlossen, welches von einer Person bedient werden kann.

Dieses Konzept kann beispielsweise bei Einzelrad-Triebfahrwerken für Niederflur-Straßenbahnen eingesetzt werden. Ein Vorteil des Einsatzes kann darin liegen, dass Rad- und Schienenverschleiß im Betrieb reduziert werden kann. Dieser Verschleiß kann einen Großteil von Wartungskosten (z.B. Überdrehen der Radreifen, bzw. Schleifen der Schienen) bedingen. Zusätzlich lassen sich Reduzierungen im Laufgeräusch erwarten. Auch gibt es bei diesem Konzept keinerlei verspannte Getriebe mehr, was die Zuverlässigkeit des Antriebs deutlich erhöht.

Bei dem Konzept kann eine individuelle Steuerung von PM Fahrmotoren (permanenterregte Synchronmaschinen) für Einzelradantrieb derart ausgenutzt werden, dass ein Spurführungs-Assistenzsystem 30 das Schienenfahrzeug ergänzt. Auch kann ein vielleicht in der maschinennahen Regelung vorhandener Lagewinkel für dieses Assistenzsystem 30 verwendet werden. Damit lässt sich z.B. in einer Geraden eine Winkelkopplung der beiden Räder realisieren, d.h. eine Radsatzwelle emulieren, die ja nicht nur die Drehzahlen, sondern über eine Drehfeder die Winkel der beiden Räder koppelt. In diesem Fall könnte auf die Lagegeber auch verzichtet werden.

Softwaretechnisch kann eine echte Radsatz-Emulation realisiert werden, die dann im Gleisbogen wieder ausgeschaltet werden kann. Beim Übergang in den Gleisbogen kann die Einfahrt in den Bogen über eine Drehmoment-Vorgabe verschleißoptimal unterstützt werden.

Die Darstellung gemäß FIG 6 zeigt schematisch eine Fahrmoduswechseleinrichtung 40, mit welcher abhängig von Streckendaten 60 und Positionsdaten 61 zwischen dem Gleisbogen-Fahrmodus 41 und dem Geraden-Fahrmodus 42 gewechselt werden kann. Der Wechsel kann hart erfolgen oder auch mittels einer Übergangsfunktion.

## Patentansprüche

1. Schienenfahrzeug (1), welches ein Antriebsgestell (3) aufweist, wobei das Antriebsgestell (3) angetriebene Räder (5, 6,7,8) aufweist, wobei jedes angetriebene Rad (5,6,7,8) des Antriebsgestells (3) mittels einer elektrischen Maschine (9, 10,11,12) antreibbar ist, wobei den elektrischen Maschinen (9,10,11,12) jeweils ein Stromrichter (13,14,15,16) zugeordnet ist, wobei derart jedem angetriebenen Rad (5,6,7,8) jeweils ein eigener Stromrichter (13,14,15,16) zugeordnet ist.

2. Schienenfahrzeug (1) nach Anspruch 1, wobei jedem angetriebenen Rad ein eigenes Regelungssystem (17,18,19,20) zugeordnet ist, wobei das dem jeweiligen Rad (5,6,7,8) zugeordnete Regelungssystem (17,18,19,20) der jeweiligen elektrischen Maschine (9,10,11,12) zugeordnet ist.

3. Schienenfahrzeug (1) nach Anspruch 1 oder 2, wobei die Regelungssysteme (17,18,19,20) eines Antriebsgestells (3) einen gemeinsamen Synchronisationstakt verwenden.

4. Schienenfahrzeug (1) nach einem der Ansprüche 1 bis 3, wobei die Regelungssysteme (17,18,19,20) eines Antriebsgestells (3) eine datentechnische Verbindung zu einem Systembus (22) aufweisen, wobei die Regelungssysteme (17,18,19,20) eines Antriebsgestells (3) auf den Systembus (22) synchronisiert sind.

5. Schienenfahrzeug (1) nach einem der Ansprüche 1 bis 4, wobei das Antriebsgestell (3) zwei Räder (5,6,7,8) aufweist, welche einander gegenüber positioniert sind und unterschiedlichen Schienen (24,25) zuzuordnen sind, wobei den gegenüber liegenden Rädern (5,6,7,8) und/oder den zugeordneten elektrischen Maschinen jeweils ein Lagegeber (26) oder einen Geber (26) dessen Ausgangssignal als ein Lageistwert verwendet werden kann, zugeordnet ist.

6. Schienenfahrzeug (1) nach einem der Ansprüche 1 bis 5, wobei das Antriebsgestell (3) zwei Räder (5,6,7,8) aufweist, welche einander gegenüber positioniert sind und unterschiedlichen Schienen (24, 25) zuzuordnen sind, wobei die Bewegung zumindest eines der zwei Räder mittels einer Lageregelung geregelt bewegbar ist.

7. Schienenfahrzeug (1) nach einem der Ansprüche 1 bis 6, wobei eine Spurführungseinrichtung (30) mit den Regelungssystemen (17,18,19,20) datentechnisch verbunden ist, wobei mittels der Spurführungseinrichtung (30) die Regelungssystem (17,18, 19,20) koordinierbar sind, wobei zumindest eine der folgenden Koordinationsfunktionen erzielbar ist:
• eine Winkelkopplung zumindest zwischen zwei Rädern (5,6, 7,8);
• eine Momentenregelung von zumindest einem Rad (5,6,7,8);
• eine streckendatenabhängige Regelung zumindest eines Rades (5,6,7,8); und
• eine von der Position des Schienenfahrzeuges abhängige Regelung zumindest eines Rades (5,6,7,8).

8. Schienenfahrzeug (1) nach einem der Ansprüche 1 bis 7, wobei mittels eines Mensch-Maschine-Interfaces (32) die Regelungssysteme (17,18,19,20) jeweils einzeln pro Rad (5,6,7,8) und/oder gemeinsam für eine Vielzahl von Rädern (5,6,7,8) gleichzeitig beeinflussbar sind.

9. Schienenfahrzeug (1) nach einem der Ansprüche 1 bis 8, wobei angetriebene Räder (5,6,7,8) eines Antriebsgestells (3) mit den jeweiligen Stromrichter (13,14,15,16) einem gemeinsamen elektrischen Zwischenkreis (36) zugeordnet sind, welcher einen Zwischenkreiskondensator (38) aufweist.

10. Schienenfahrzeug (1) nach einem der Ansprüche 6 bis 9, wobei mittels der Spurführungseinrichtung (30) Streckendaten (60) verarbeitbar sind und/oder globale Positionsdaten (61).

11. Schienenfahrzeug (1) nach einem der Ansprüche 1 bis 10, wobei das Schienenfahrzeug (1) einen Gleisbogen-Fahrmodus (41) und einen Strecken-Fahrmodus (42) aufweist.

12. Schienenfahrzeug (1) nach Anspruch 11, wobei eine Fahrmoduswechseleinrichtung (40) zum Wechsel zwischen dem Gleisbogen-Fahrmodus (41) und dem Geraden-Fahrmodus (42) vorgesehen ist.

13. Schienenfahrzeug (1) nach Anspruch 11 oder 12, wobei ein Wechsel zwischen den Fahrmodi abhängig von Streckendaten (60) und/oder einer globalen Fahrzeugposition (61) erfolgt.

14. Schienenfahrzeug (1) nach einem der Ansprüche 11 bis 13, wobei ein Wechsel zwischen den Fahrmodi abhängig ist von Streckendaten (60) und/oder globalen Positionsdaten (61), wobei im Schienenfahrzeug die Position der angetriebenen Räder zueinander gespeichert ist.

15. Schienenfahrzeug (1) nach einem der Ansprüche 11 bis 14, während des Wechsels eine Momentenregelung eines Rades (5,6, 7,8) aktiviert ist.
